# EUROPEAN PATENT SPECIFICATION

(11) **EP 2 684 632 B1**
(45) Date of publication and mention of the grant of the patent: **03.04.2019**
(21) Application number: 13175673.6
(22) Date of filing: 09.07.2013
(51) Int. Cl.: B23D 59/00, B27G 19/02

(54) **Cutting tools**
Schneidewerkzeuge
Outils de coupe

(30) Priority: 11.07.2012 JP 2012155168
(43) Date of publication of application: 15.01.2014
(73) Proprietor: Makita Corporation, Anjo-shi, Aichi 446-8502 (JP)
(72) Inventor: Matsubara, Kouji, Anjo-shi,, Aichi 446-8502 (JP)
(74) Representative: Kramer Barske Schmidtchen Patentanwälte PartG mbB

(56) References cited:
- EP-A1- 0 601 805
- EP-A1- 2 599 601
- WO-A2-2005/102626
- US-A- 3 514 906
- US-A1- 2002 104 416

## Description

Embodiments of the present invention relate to cutting tools such as metal cutting chop saws that may be used for cutting metal workpieces, e.g., metal pipes.

WO 2005/102626 A2 discloses a miter saw comprising a dust collection assembly.

EP259901A discloses a cutting tool comprising a base having an upper surface for placing a workpiece thereon, and a tool unit vertically movably supported on the base and comprising a rotary circular cutter for cutting the workpiece and a cover configured to cover a part of the cutter,a chip guard disposed between the base and the cover and configured to receive chips of the workpiece produced at a cut portion of the cutter and blown in a rearward direction from the cut portion, wherein the chip guard comprises a first chip guard mounted to the base and a second chip guard mounted to the cover, wherein the cutter is for cutting a metal workpiece and the first chip guard and the second chip guard at least partly overlap with each other along the vertical direction throughout the vertically movable range of the tool unit.

Known metal cutting chop saws are disclosed, for example, in JP-A-2008-119812 and JP-A-2010-69590. This kind of metal cutting chop saws may generally include a base for supporting a workpiece, and a tool unit vertically swingably supported on the base. The tool unit may include a circular cutter, such as a thin disk-like grinding wheel or a chip saw dedicated for cutting metal workpieces. The circular cutter may be rotatably driven by an electric motor. A fixed cover may cover a substantially upper circumferential half of the cutter and may prevent powder or chips produced by the cutting operation from scattering to the surroundings.

In this kind of metal cutting chop saws, sparks or chips, such as iron chips, produced at the cut portion of the cutter may have a relatively high temperature. For this reason, it is particularly necessary to prevent the chips from scattering to the surroundings. Typically, the chips may be blown from the cut portion in a rearward direction toward the side opposite to the operator.

Although a part of the chips blown from the cut portion may be blown upward into the fixed cover by the rotation of the circular cutting tool, most of the chips may be scattered directly rearward. Therefore, the provision of only the stationary cover is not sufficient as a measure for preventing the chips from being scattered. For this reason, there has been proposed various measures that are provided in addition to the fixed cover for preventing the chips from being scattered. For example, JP-A-2010-69590 proposes a technique of providing a chip guard at a position on the rear side of the cut portion for preventing chips from being scattered. In this publication, the chip guard is provided on the base at a position on the rear side of the cut portion, so that the chip guard can receive chips blown from the cut portion in a tangential direction, whereby the chips can be prevented from being scattered.

However, as the tool unit moves downward as a cutting operation proceeds, the blowing direction of chips blown rearward in the tangential direction from the cut portion may gradually shift upward. Therefore, a possibility may exist that a part of chips blown from the cut portion may scatter rearward through a space produced between the rear edge of the fixed cover and the chip guard. In order to solve this problem, it may be considered to extend the rear edge of the fixed cover downward to be able to cover a range nearer to the cut portion. However, in this case, chips produced at the cut portion may be received by the rear portion of the fixed cover and may circulate toward the side of the operator. This may result an opposite effect of increasing the scattering range of the chips.

Therefore, there has been a need in the art for reliably preventing chips or dust produced by the cutting operation from scattering to the surroundings.

This object can be achieved by providing a cutting tool according to claim 1.
FIG 1 is a side view of a cutting tool according to an embodiment showing a tool unit positioned at an uppermost position;
FIG. 2 is a side view similar to FIG. 1 but showing the tool unit positioned at an intermediate position between the uppermost position and a lowermost position;
FIG. 3 is a side view similar to FIG. 1 but showing the tool unit positioned at the lowermost position;
FIG. 4 is a plan view of the cutting tool as viewed in a direction indicated by arrow IV in FIG. 3;
FIG. 5 is an enlarged view of a part of FIG. 2 showing a chip guard and its peripheral portion;
FIG. 6 is a perspective view of a first chip guard;
FIG. 7 is a bottom view of a second chip guard as viewed in a direction of arrow VII in FIG. 5; and
FIG. 8 is a plan view of the second chip guard as viewed in a direction of arrow VIII in FIG. 5.

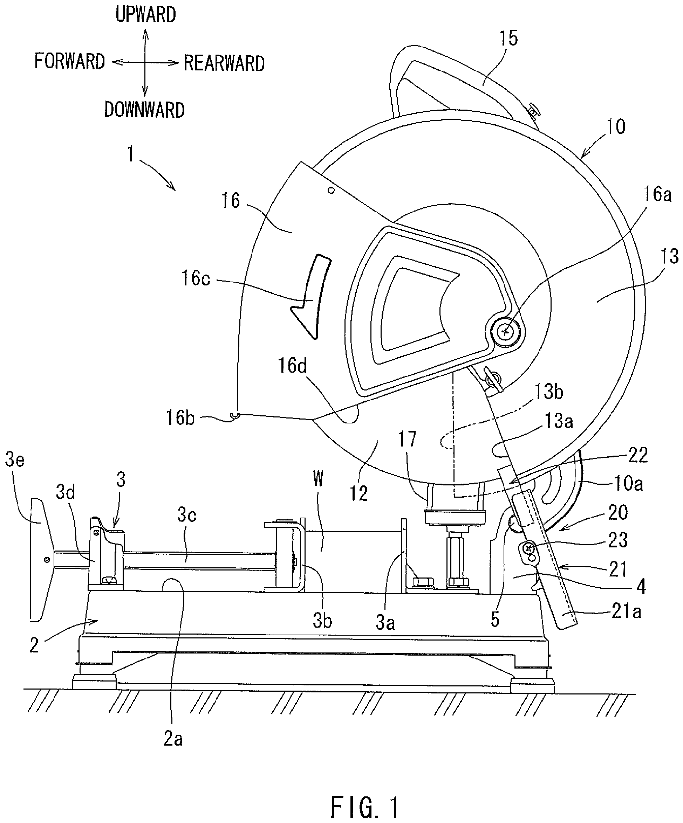

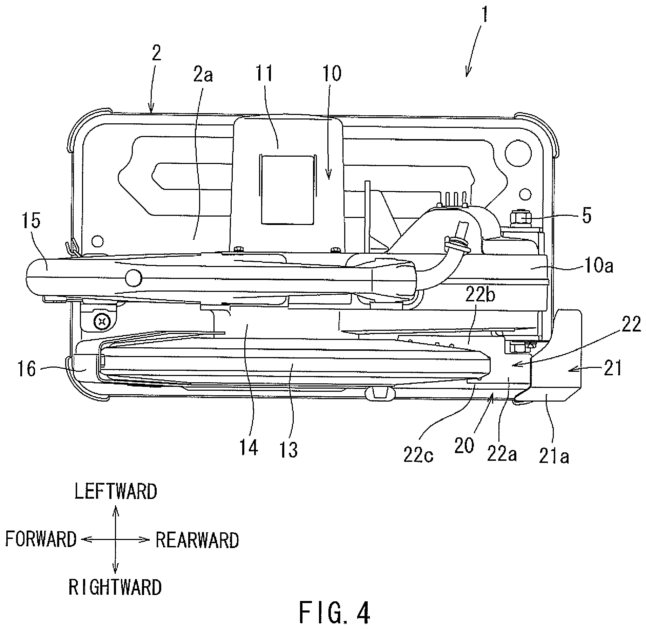

An embodiment will now be described with reference to FIGS. 1 to 8. FIG. 1 shows a cutting tool 1 according to the embodiment. The cutting tool 1 may be a metal cutting tool used mainly for cutting a metal workpiece W. The cutting tool 1 may generally include a base 2, on which the workpiece W can be placed, and a tool unit 10 supported on the base 2. In order to operate the cutting tool 1, the operator may be positioned on the left side as viewed in FIG. 1. In the following description, the forward direction is determined to be a direction toward the operator (leftward direction in FIG. 1), and the rearward direction is determined to be a direction away from the operator (rightward direction in FIG. 1). As shown in FIG. 4, the leftward and rightward directions are determined to be those as viewed from the side of the operator.

A vice device 3 may be mounted to an upper surface 2a of the base 2 for fixing the workpiece W in position. The vice device 3 may be that known as a "quick vice" and may include a guide fence 3a and a vice plate 3b for clamping the workpiece from the front side and the rear side thereof. The vice device 3 may further include a threaded shaft 3c operable for pressing the vice plate 3b against the guide fence 3a, and a vice base 3d supporting the threaded shaft 3c in such a manner that the state of the threaded shaft 3c can be switched between a thread-engagement state and a thread-disengagement state. The guide fence 3a may be fixedly mounted to the upper surface 2a of the base 2. The vice plate 3b may be supported on the rear end of the threaded shaft 3c such that it can swing in the left and right directions. A handle 3e may be attached to the front end on the side of the operator of the threaded shaft 3c, so that the operator can grasp the handle 3e for operating the threaded shaft 3c. When the threaded shaft 3c is rotated in a tightening direction with the vice base 3d switched to the thread-engaging state, the workpiece W may be firmly clamped between the guide fence 3a and the vice plate 3b so as to be fixed in position. When the vice base 3d is switched to the thread-disengaging state, the threaded shaft 3c can freely move in the axial direction. Therefore, in the thread-disengaging state, the vice plate 3b can be quickly moved in the forward and rearward directions. In this way, it is possible to quickly perform the operation for fixing the workpiece W in position and also the operation for removing the workpiece W.

The tool unit 10 may be vertically movably supported on the upper surface 2a of the base 2 at a position proximal to the rear end of the base 2. More specifically, a unit support 4 may be mounted to the upper surface 2a of the base 2. The tool unit 10 may have a pivotal arm 10a that is vertically pivotally supported by the unit support 4 via a support shaft 5. A compression spring 17 may be interposed between the tool unit 10 and the upper surface 2a of the base 2 for normally biasing the tool unit 10 in such a direction that the tool unit 10 pivots upward toward its uppermost position.

The tool unit 10 may include a circular cutter 12 that may be a grinding wheel or a circular cutting blade. The circular cutter 12 may be rotatably driven by an electric motor 11 that serves as a drive source. The tool unit 10 may further include a fixed cover 13 that can cover mainly half the circumferential range on the upper side of the cutter 12. As shown in FIG. 4, the electric motor 11 may be mounted to the left side (backside) of the fixed cover 13 via a reduction gear section 14, so that the electric motor 11 protrudes leftward from the fixed cover 13.

A loop-shaped handle 15 capable of being grasped by the operator may be provided on the upper surface of the reduction gear section 14. A switch lever (not shown) may be provided on the handle 15. The switch lever can be pulled by a finger of the operator for starting the motor 11, causing the cutter 12 to rotate at a high speed in a given direction. A half the circumferential range on the lower side of the cutter 12 may be exposed from the fixed cover 13. A movable cover 16 can cover mainly the front part of the exposed portion of the cutter 12. The movable cover 16 may be rotatably supported on the fixed cover 13 via a support shaft 16a, so that the movable cover 16 can rotate within a predetermined angular range about the support shaft 16a. When the tool unit 10 is positioned at its uppermost position shown in FIG. 1, the movable cover 16 may cover substantially the upper half of the exposed portion of the cutter 12 exposed from the fixed cover 13. The position of the movable cover 16 for covering substantially the upper half of the exposed portion of the cutter 12 shown in FIG. 1 may be a maximum covering position. A stopper (not shown) may hold the movable cover 16 at the maximum covering position relative to the fixed cover 13. The movable cover 16 can rotate in a counterclockwise direction as viewed in FIG. 1 from the maximum covering position.

An abutment member 16b may be provided at the lower leading end with respect to the counterclockwise rotational direction of the movable cover 16. As the tool unit 10 moves downward, the abutment member 16b may abut to the upper surface 2a of the base 2. As the tool unit moves further downward after the abutment member 16b has abutted to the upper surface 2a, the movable cover 16 may rotate in the clockwise direction relative to the fixed cover 13. In other words, the movable cover 16 may move to be opened. An outline arrow 16c indicating the rotational direction of the cutter 12 may be marked on the movable cover 16.

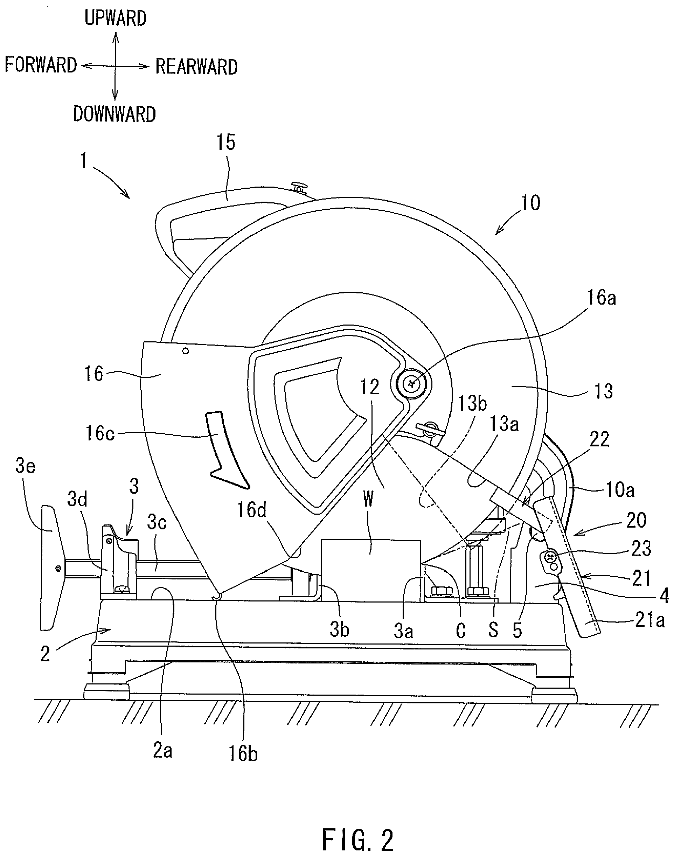

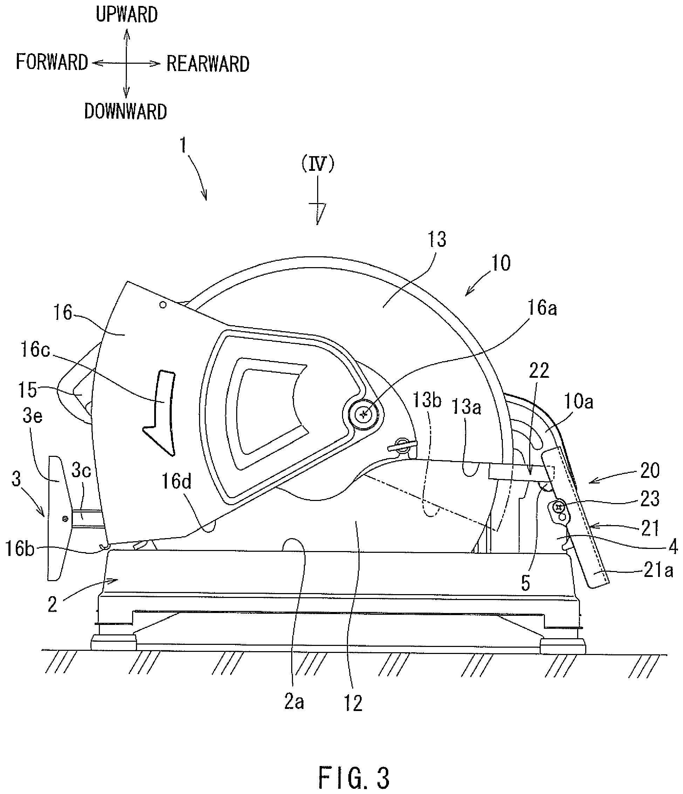

A portion of the cutter 12 positioned between a rear edge 13a of the fixed cover 13 and a front edge 16d of the movable cover 16 may be exposed (uncovered). The rear edge 13a may be positioned on the rear side with respect to the rotational direction of the cutter 12 and may extend substantially in a radial direction with respect to the rotational axis of the cutter 12. The front edge 16d may be positioned on the front side with respect to the rotational direction of the cutter 12 and may extend substantially in the radial direction. The exposed portion of the cutter can cut into the workpiece W. When the tool unit 10 is positioned at the uppermost position shown in FIG. 1, where the movable cover 16 is positioned at the maximum covering position, the exposed portion of the cutter 12 may have a minimum area. When the tool unit 10 is positioned at its lowermost position shown in FIG. 3, the movable cover 16 is positioned at a minimum covering position, so that the exposed portion of the cutter 12 may have a maximum area. Thus, as the tool unit 10 moves further downward after the abutment member 16b has abutted to the upper surface 2a of the base 2 as shown in FIG. 2, the movable cover 16 may rotate to gradually increase the area of the exposed portion of the cutter 12 until the tool unit 10 reaches the lowermost position shown in FIG. 3.

Chips may be produced when the exposed portion of the cutter 12 cuts into the workpiece W. If the workpiece W is made of metal, fine metal chips and sparks may be produced and may be blown from the cut portion. Because the rotational direction of the cutter 12 is the counterclockwise direction as viewed in FIGS. 1 to 3, the chips may be blown rearward from the cut portion. More specifically, the cut portion may be a portion C of the cutter 12 shown in FIG. 2, where the circumferential edge of the cutter 12 intersects the rear end surface of the workpiece W, which is in contact with the front surface of the guide fence 3a. In the following description, the portion C will be referred to as a "cut portion C." The chips may be blown rearward from the cut portion C in a direction obliquely upward along a tangential direction S of the circumferential edge of the cutter 12.

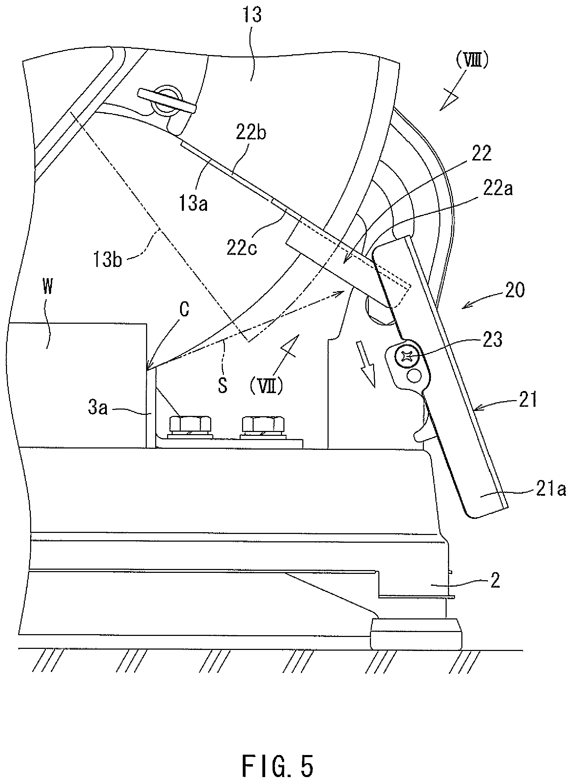

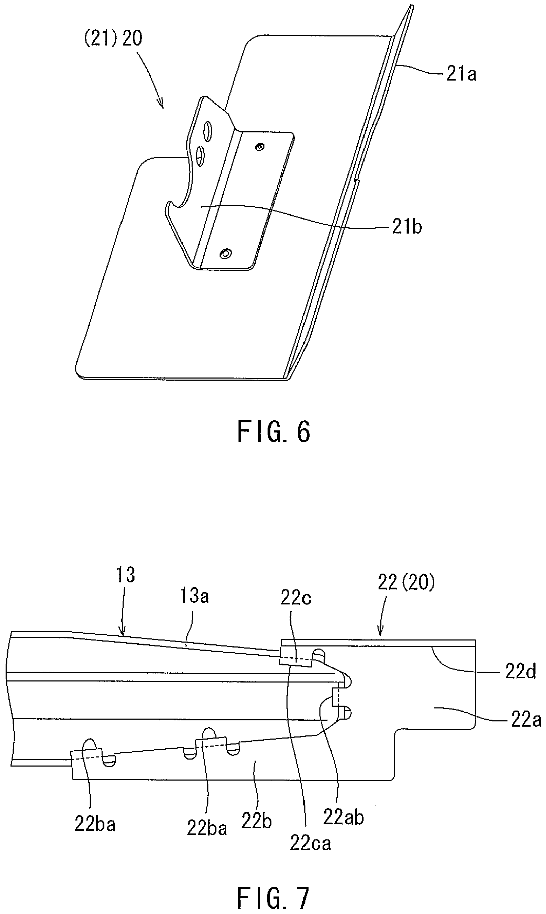

The chips blown from the cut portion C along the tangential direction S may be spread upward and downward within an angular range from the tangential line and may be received by a chip guard 20. The chip guard 20 may guide the chips downwardly toward the upper surface 2a of the base 2 as indicated by an outline arrow in FIG. 5, so that the chips may be accumulated on the upper surface 2a. Therefore, the chips may not scatter to the surroundings. The chip guide 20 may include a first chip guard 21 on the side of the base 2 and a second chip guard 22 on the side of the fixed cover 13. The first chip guard 21 may be fixedly attached to a lateral side surface of the unit support 4 by a fixing screw 23. As shown in FIG. 2, the first chip guard 21 may be fixed in an inclined position such that it extends substantially perpendicular to the tangential direction S and that its lower portion is positioned on the rear side of the front portion. FIG. 6 shows the first chip guard 21 that has been removed from the unit support 4. The first chip guard 21 may have a shape like a substantially flat plate and may have a right covering portion 21a that is formed by upwardly bending a right edge portion of the flat plate. A mount member 21b may be fixedly attached to a substantially central portion of the upper surface of the first chip guard 21. The mount member 21b may be fixed to the lateral surface of the unit support 4 by the fixing screw 23, so that the first chip guard 21 can be mounted to the base 2 via the unit support 4 in the state that the first chip guard 21 is inclined relative to the upper surface 2b of the base 2.

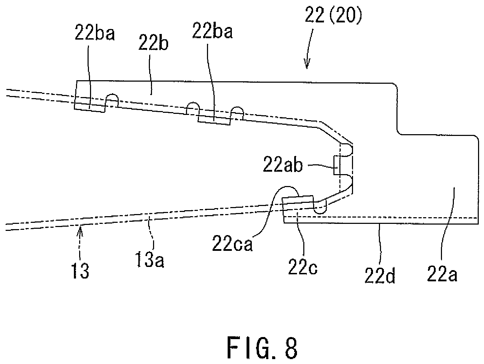

The second chip guard 22 may be mounted to the rear edge 13a of the fixed cover 13. The details of the second chip guard 22 are shown in FIGS. 7 and 8. As show in these figures, the second chip guard 22 may be attached to the rear edge 13a of the fixed cover 13 so as to extend in the radial direction along the rear edge 13a. Also, the second chip guard 22 may have a shape like a substantially flat plate. The second chip guard 22 may include a covering portion 22a, a long mount portion 22b and a short mount portion 22c. The covering portion 22a may extend radially outward from rear edge 13a. The long mount portion 22b and the short mount portion 22c may extend in a bifurcated manner from the inner end (front end) of the covering portion 22a. A right edge portion of the covering portion 22a may be bent downward to form a right covering portion 22d. Two joint tabs 22ba may be formed along the inner edge of the long mount portion 22b. A single joint tab 22ca may be formed along the inner edge of the short mount portion 22c. A single joint tab 22ab may be formed at a connection edge between the inner edges of the long mount portion 22b and the short mount portion 22c.

The second chip guard 22 may be mounted to the rear edge 13 of the fixed cover 13, which may have a substantially laterally facing U-shape as shown in FIGS. 7 and 8, in the following manner. First, the second chip guard 22 may be positioned such that (a) the long mount portion 22b extends along the backside (lower side in FIG. 7, upper side in FIG. 8) of the U-shape of the rear edge 13a and (b) the short mount portion 22c extends along the front side (upper side in FIG. 7, lower side in FIG. 8) of the U-shape of the rear edge 13a. Thereafter, the joint tabs 22ba, 22ca and 22ab may be welded to the inner circumference of the rear edge 13a.

The covering portion 22a of the second chip guard 22 mounted as described above may be positioned on the front side of the first chip guard 21 and at least partly overlapped with the first chip guard 21 along the longitudinal direction as long as the tool unit 10 is positioned between it uppermost position and the lowermost position as shown in FIGS. 1 to 3. In addition, the size of the second dust guard 22, in particular the size of extension from the rear edge 13a of the fixed cover 13, may be suitably determined not to interact with the first chip guard 21 during the movement of the tool unit 10 between the uppermost position and the lowermost position. More specifically, the position of the rearwardly extending end (right end as viewed in FIGS. 7 and 8) of the covering portion 22a and the position of the first chip guard 21 with respect to the forward and rearward direction may be determined such that the distance between the pivotal axis of the tool unit 10 (i.e., the axis of the support shaft 5) and the rearwardly extending end of the covering portion 22a is smaller than the distance between the pivotal axis of the tool unit 10 and the first chip guard 21. In this way, the path of movement of the rearwardly extending end of the covering portion 22a, i.e., the rearwardly extending end of the second chip guard 22, may not intersect the first chip guard 21.

With the cutting tool 1 of the above embodiment, the chip guard 20 may extend along the entire vertical length of a space that is formed between the rear edge 13a of the fixed cover 13 and the upper surface 2a of the base 2 and is positioned on the front side with respect to the blowing direction of chips blown along the tangential direction S from the cut portion C of the cutter 12. Therefore, most of the chips blown from the cut portion C may be received by the chip guard 20 and may be guided toward the side of the upper surface 2a of the base 2 as indicated by an outline arrow in FIG. 5. Therefore, the chips may be reliably prevented from being scattered to the surroundings.

In the case that the rear edge 13a of the fixed cover 13 is extended to a position 13b indicated by chain lines in FIG. 5 to incase the range of covering the cutter 12 or increase the size the fixed cover 13, it may be also possible to receive the chips blown along the tangential direction S. However, in this case, the chips received by the rear end portion of the fixed cover 13 may circulate along the inner wall of the fixed cover 13 by the action of the rotating cutter 12 and may be blown toward the side of the operator from the front end of the fixed cover 13.

In contrast, according to the present embodiment, the rear edge 13a is not extended to the position 13b shown in FIG. 5 to increase the size of the fixed cover 13 for receiving the chips. Instead, the chip guard 20 includes the second chip guard 22 attached to the rear edge 13a of the fixed cover 13 and extending in the radial direction for receiving the chips. Therefore, it is possible to prevent the chips from being scattered to the surroundings, while the chips do not circulate toward the side of the operator.

In addition, according to the present embodiment, the second chip guard 22 for receiving the chips may be provided on the side of the fixed cover 13 and extend in the radial direction. Therefore, if the rearwardly extending end of the second chip guard 22 is assumed as the rear end of the fixed cover 13, the upper end of the first chip guard 21 may be extended to a level that is sufficiently higher than the tangential line S of the cutter 12, which extends across the rear end of the fixed cover 13. In this way, it is possible to further reliably prevent chips from being scattered.

Further, according to the present embodiment, the chip guard 20 is separated with respect to the vertical direction into the first chip guard 21 on the side of the base 2 and the second chip guard 22 on the side of the fixed cover 13. Throughout the entire vertically movable range of the tool unit 10, the first chip guard 21 and the second chip guard 22 are overlapped with each other along the longitudinal direction and extend along the entire vertical length of the space formed between the rear edge 13a of the fixed cover 13 and the upper surface 2a of the base 2. Therefore, it is possible to further reliably prevent chips from scatting to the surroundings.

Furthermore, through the vertical movable range of the tool unit 10, the second chip guard 22 is inclined downward in the rearward direction (i.e., the chip blowing direction). Therefore, it is possible to efficiently receive chips and guide them toward the side of the upper surface 2a of the base 2. In this way, it is possible to further reliably prevent chips from scattering to the surroundings.

Still furthermore, throughout the entire vertical movable range of the tool unit 10, the second chip guard 22 does not interact with the first chip guard 21. Therefore, it is possible to ensure a smooth vertical movement of the tool unit 10.

The above embodiment may be modified in various ways. For example, although the second chip guard 22 extends along a straight line in the radial direction, it may be possible that its rearwardly extending end is curved rearwardly with respect to the rotational direction of the cutter 12.

Further, although the first chip guard 21 is fixed in position relative to the base 2 so as to be inclined by a given angle with respect to the upper surface 2a of the base 2, the first chip guard 21 may be supported such that it is free to pivot in the forward and rearward directions within such a range that the upper portion of the first chip guard 21 is positioned on the front side relative to the lower portion of the same. In such a case, as the tool unit 10 moves downward, the rearwardly extending end of the second chip guard 22 may push the upper portion of the first chip guard 21 to pivot the first chip guard 21 in such a direction that the upper portion of the first chip guard 21 moves rearward. In this way, although the first chip guard 21 and the second chip guard 22 may interact with each other, the vertical movement of the tool unit 10 may not be prevented by the interaction due to the pivotal support of the first chip guard 21 by the base 2. Also, in this case, chips blown in the tangential direction S can be efficiently received by the chip guard 20 without causing the chips to scatter rearward.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A cutting tool (1) comprising
a base (2) having an upper surface (2a) for placing a workpiece (W) thereon, and
a tool unit (10) vertically movably supported on the base (2) and comprising a rotary circular cutter (12) for cutting the workpiece (W) and a cover (13) configured to cover a part of the cutter (12),
a chip guard (20) disposed between the base (2) and the cover (13) and configured to receive chips of the workpiece (W) produced at a cut portion (C) of the cutter (12) and blown in a rearward direction from the cut portion (C),
wherein the chip guard (20) comprises a first chip guard (21) mounted to the base (2) and a second chip guard (22) mounted to the cover (13),
the cutter (12) is designed for cutting a metal workpiece (W) and the chips of the workpiece (W) received by the chip guard (20) are fine metal chips and sparks,
the chip guard (20) extends along an entire vertical length of a space formed between the cover (13) and the upper surface (2a) of the base (2),
the second chip guard (22) is inclined downward in the rearward direction throughout the vertically movable range of the tool unit (10),
the chip guard (20) guides the chips downwardly toward the upper surface (2a) of the base (2) such that the chips are accumulated on the upper surface (2a), and
the first chip guard (21) and the second chip guard (22) at least partly overlap with each other along the vertical direction throughout the vertically movable range of the tool unit (10).

2. The cutting tool (1) according to claim 1, wherein the second chip guard (22) extends from a rear edge (13a) of the cover (13) in a direction substantially radially outward with respect to a rotational axis of the cutter (12).

3. The cutting tool (1) according to claim 1 or 2, wherein the tool unit (10) is vertically pivotally supported on the base (2), and the second chip guard (22) does not intersect with the first chip guard (21) throughout a vertically pivotal range of the tool unit (10).

4. The cutting tool (1) according to any one of claims 1 to 3, wherein the first chip guard (21) is detachably mounted to the base (2).

5. The cutting tool (1) according to any one of claims 1 to 4, wherein the cover (13) is fixed in position relative to the tool unit (10).

6. The cutting tool (1) according to any one of claims 1 to 5, wherein
the second chip guard (22) is mounted to a rear edge (13a) of the cover (13),
the second chip guard (22) has a shape like a flat plate and comprises a covering portion (22a), a long mount portion (22b) and a short mount portion (22c), and
the path of movement of the rearwardly extending end of the covering portion (22a) does not intersect the first chip guard throughout a vertically pivotal range of the tool unit (10) which is vertically pivotally supported on the base (2).

7. The cutting tool (1) according to any one of claims 1 to 6, wherein
the cutting tool further comprises a unit support (4) mounted to the upper surface (2a) of the base (2),
the first chip guard (21) is fixedly attached to a lateral side surface of the unit support (4) by a fixing screw (23), and
the first chip guard (21) is fixed in an inclined position such that it extends substantially perpendicular to a tangential direction (S) defined by the cut portion (C) and that its lower portion is positioned on the rear side of its front portion.

## Patentansprüche

1. Schneidwerkzeug (1), mit
einer Basis (2), die eine obere Oberfläche (2a) zum Platzieren eines Werkstückes (W) darauf aufweist, und
einer Werkzeugeinheit (10), die auf der Basis (2) vertikal bewegbar gelagert ist und ein drehendes kreisförmiges Schneidmesser (12) zum Schneiden des Werkstückes (W) und eine Abdeckung (13) aufweist, die zum Abdecken eines Teils des Schneidmesser (12) konfiguriert ist,
einer Späneschutzvorrichtung (20), die zwischen der Basis (2) und der Abdeckung (13) angeordnet ist und zum Aufnehmen von Spänen des Werkstückes (W), die an einem Schneidbereich (C) des Schneidmessers (12) erzeugt werden und in einer Richtung nach hinten von dem Schneidbereich (C) geblasen werden, konfiguriert ist,
bei dem die Späneschutzvorrichtung (20) eine erste Späneschutzvorrichtung (21), die an die Basis (2) montiert ist, und eine zweite Späneschutzvorrichtung (22), die an der Abdeckung (13) montiert ist, aufweist,
das Schneidmesser (12) zum Schneiden eines Metallwerkstückes (W) ausgelegt ist und die Späne des Werkstückes (W), die durch die Späneschutzvorrichtung (20) aufgenommen werden, feine Metallspäne und Funken sind,
die Späneschutzvorrichtung (20) sich entlang einer gesamten vertikalen Länge eines Raumes erstreckt, der zwischen der Abdeckung (13) und der oberen Oberfläche (2a) der Basis (2) ausgebildet ist,
die zweite Späneschutzvorrichtung (22) nach unten in der Richtung nach hinten über den vertikal bewegbaren Bereich der Werkzeugeinheit (10) geneigt ist,
die Späneschutzvorrichtung (20) die Späne nach unten in Richtung der oberen Oberfläche (2a) der Basis (2) derart führt, dass sich die Späne auf der oberen Oberfläche (2a) ansammeln, und
die erste Späneschutzvorrichtung (21) und die zweite Späneschutzvorrichtung (22) zumindest teilweise miteinander entlang der vertikalen Richtung über den vertikal bewegen Bereich der Werkzeugeinheit (10) überlappen.

2. Schneidwerkzeug (1) nach Anspruch 1, bei dem die zweite Späneschutzvorrichtung (22) sich von einer hinteren Kante (13a) der Abdeckung (13) in einer Richtung im Wesentlichen radial nach außen in Bezug auf eine Drehachse des Schneidmessers (12) erstreckt.

3. Schneidwerkzeug (1) nach Anspruch 1 oder 2, bei dem die Werkzeugeinheit (10) auf der Basis (2) vertikal schwenkbar gelagert ist, und die zweite Späneschutzvorrichtung (22) nicht mit der ersten Späneschutzvorrichtung (21) über einen vertikalen Schwenkbereich der Werkzeugeinheit (10) kreuzt.

4. Schneidwerkzeug (1) nach einem der Ansprüche 1 bis 3, bei dem die erste Späneschutzvorrichtung (21) an die Basis (2) entfernbar montiert ist.

5. Schneidwerkzeug (1) nach einem der Ansprüche 1 bis 4, bei dem die Abdeckung (13) in der Position relativ zu der Werkzeugeinheit (10) fixiert ist.

6. Schneidwerkzeug (1) nach einem der Ansprüche 1 bis 5, bei dem
die zweite Späneschutzvorrichtung (22) an eine hintere Kante (13a) der Abdeckung (13) montiert ist,
die zweite Späneschutzvorrichtung (22) eine Form einer flachen Platte aufweist und einen Abdeckungsbereich (22a), einen langen Montagebereich (22b) und einen kurzen Montagebereich (22c) aufweist, und
der Bewegungsweg des sich nach hinten erstreckenden Endes des Abdeckungsbereiches (22a) nicht die erste Späneschutzvorrichtung über einen vertikalen Schwenkbereich der Werkzeugeinheit (10), welche auf der Basis (2) vertikal schwenkbar gelagert ist, kreuzt.

7. Schneidwerkzeug (1) nach einem der Ansprüche 1 bis 6, bei dem
das Schneidwerkzeug ferner eine Einheitslagerung (4) aufweist, die auf die obere Oberfläche (2a) der Basis (2) montiert ist,
die erste Späneschutzvorrichtung (21) fest an einer seitlichen Seitenoberfläche der Einheitslagerung (4) mittels einer Fixierungsschraube (23) angebracht ist, und
die erste Späneschutzvorrichtung (21) in einer geneigten Position derart fixiert ist, dass sie sich im Wesentlichen senkrecht zu einer tangentialen Richtung (S), die durch den Schneidbereich (C) definiert wird, erstreckt, und dass ihr unterer Bereich an der Rückseite ihres vorderen Bereiches positioniert ist.

## Revendications

1. Outil de coupe (1) comprenant
une base (2) ayant une surface supérieure (2a) pour placer une pièce (W) sur celle-ci, et
une unité d'outil (10) supportée verticalement de manière mobile sur la base (2) et comprenant un couteau circulaire rotatif (12) pour couper la pièce (W) et un couvercle (13) configuré pour recouvrir une partie du couteau (12),
un protège-copeau (20) disposé entre la base (2) et le couvercle (13) et configuré pour recevoir des copeaux de la pièce (W) produite au niveau d'une partie de coupe (C) du couteau (12) et soufflée dans une direction arrière depuis la partie de coupe (C),
dans lequel le protège-copeau (20) comprend un premier protège-copeau (21) monté sur la base (2) et sur un deuxième protège-copeau (22) monté sur le couvercle (13),
le couteau (12) est conçu pour couper une pièce métallique (W) et les copeaux de la pièce (W) reçus par le protège-copeau (20) sont des copeaux métalliques fins et des étincelles,
le protège-copeau (20) s'étend sur toute une longueur verticale d'un espace formé entre le couvercle (13) et la surface supérieure (2a) de la base (2),
la deuxième pare-copeau (22) est incliné vers le bas dans la direction arrière sur toute la plage de mobilité verticale de l'unité d'outil (10),
le protège-copeau (20) guide les copeaux vers le bas en direction de la surface supérieure (2a) de la base (2), de sorte que les copeaux s'accumulent sur la surface supérieure (2a), et
le premier protège-copeau (21) et le deuxième protège-copeau (22) se chevauchent au moins partiellement le long de la direction verticale sur toute la plage de mobilité verticale de l'unité d'outil (10).

2. Outil de coupe (1) selon la revendication 1, dans lequel le deuxième protège-copeau (22) s'étend depuis un bord arrière (13a) du couvercle (13) dans une direction sensiblement radialement vers l'extérieur par rapport à un axe de rotation du couteau (12).

3. Outil de coupe (1) selon la revendication 1 ou 2, dans lequel l'unité d'outil (10) est supportée verticalement de façon pivotante sur la base (2), et le deuxième protège-copeau (22) ne croise pas le premier protège-copeau (21) sur toute une plage de pivotement vertical de l'unité d'outil (10).

4. Outil de coupe (1) selon l'une quelconque des revendications 1 à 3, dans lequel le premier protège-copeau (21) est monté de manière amovible sur la base (2).

5. Outil de coupe (1) selon l'une quelconque des revendications 1 à 4, dans lequel le couvercle (13) est fixé en position par rapport à l'unité d'outil (10).

6. Outil de coupe (1) selon l'une quelconque des revendications 1 à 5, dans lequel
le deuxième protège-copeau (22) est monté sur un bord arrière (13a) du couvercle (13),
le deuxième protège-copeau (22) a une forme semblable à une plaque plate et comprend une partie de couverture (22a), une longue partie de montage (22b) et une courte partie de montage (22c), et
le trajet de déplacement de l'extrémité s'étendant vers l'arrière de la partie de couverture (22a) ne croise pas le premier protège-copeau sur toute une plage de pivotement vertical de l'unité d'outil (10) qui est supportée verticalement de manière mobile sur la base (2).

7. Outil de coupe (1) selon l'une quelconque des revendications 1 à 6, dans lequel
l'outil de coupe comprend en outre un support d'unité (4) monté sur la surface supérieure (2a) de la base (2),
le premier protège-copeau (21) est attaché de manière fixe à une surface latérale du support d'unité (4) par une vis de fixation (23), et
le premier protège-copeau (21) est fixé dans une position inclinée de sorte qu'il s'étend sensiblement perpendiculairement à une direction tangentielle (S) définie par la partie de coupe (C) et que sa partie inférieure est positionnée sur le côté arrière de sa partie avant.
